# EUROPEAN PATENT APPLICATION

(11) **EP 4 285 721 A1**
(43) Date of publication of application: **06.12.2023**
(21) Application number: 23176050.5
(22) Date of filing: 30.05.2023
(51) Int. Cl.: A01N 1/02, A61J 1/10

(54) **SYSTEM FOR THE EXTENDED STORAGE OF RED BLOOD CELLS**

(30) Priority: 02.06.2022 US 202263348309 P
(71) Applicant: Fenwal, Inc., Lake Zurich, IL 60047 (US)
(72) Inventor: SANDFORD, Craig L., Lake Zurich, 60047 (US)
(74) Representative: Maikowski & Ninnemann Patentanwälte Partnerschaft mbB

(57) **Abstract**

Systems for the prolonged storage of red blood cells (RBCs) are disclosed. The system includes a container made of a polymeric composition including polyvinyl chloride and a mixture of two or more hemolysis suppressing agents, and a storage medium that includes a fat emulsion entrained therein.

## Description

### Field of the Disclosure

The present disclosure is directed to the extended storage of blood and/or blood components. More particularly, the present disclosure is directed to storage systems for the extended storage of red blood cells. Even more particularly, the present disclosure is directed to a storage system for the extended storage of red blood cells that includes a storage container and a storage medium that suppress red blood cell hemolysis during such extended storage.

### Background

Whole blood is commonly collected and separated into its components such as red blood cells, platelets and plasma for later transfusion to a patient in need of the particular blood component. For example, red blood cells (hereinafter "RBCs") may be administered to a patient suffering from a loss of blood due to trauma, as a post-chemotherapy treatment, or as part of a treatment of one or more blood borne diseases, such as certain anemias and the like. Unless administered immediately after collection from a donor, RBCs must typically be stored for some period of time prior to transfusion. The storage period may be anywhere from a few days to several weeks.

Extended or prolonged storage of RBCs can (negatively) affect RBC function. In order for the RBCs to be suitable for transfusion to the recipient, RBCs must maintain adequate cell function and metabolism. For example, RBCs must maintain an adequate concentration of adenosine triphosphate (ATP) and 2, 3-DPG. In addition, the presence of lactate must not be too high in the stored RBCs. Moreover, stored RBCs must have acceptably low levels of hemolysis. Hemolysis refers to the rupturing of the RBC membrane, believed to be caused by the oxidation of phospholipids in the cell membrane. Typically, an acceptable level of hemolysis is below 1.0% (in, for example, the U.S.) and 0.8% (in Europe) after 42-day storage. More preferably, an acceptable level of hemolysis in stored RBCs may be below 0.4%.

During storage, concentrated RBCs and the additive solutions in which they are stored are typically kept in a sealed container, usually made of a plastic (polymeric) material and maintained at a temperature of approximately 4°C. Most typically, the containers approved for the collection of whole blood and the storage of RBCs are made of a polyvinyl chloride (PVC). Inasmuch as polyvinyl chloride can be somewhat rigid or brittle, a plasticizer is typically incorporated into the PVC. One example of a well-known and historically commonly used plasticizer for medical grade PVC is di-ethylhexyl phthalate ester or DEHP. Other plasticizers that have been used with PVC or other polyolefin materials include TEHTM, and the family of citrate esters described in U.S. Pat. No. 5,026,347, the contents of which is also incorporated by reference herein.

As reported in U.S. Pat. No. 5,026,347 and other literature, such as Rock, et al. "Incorporation of plasticizer into red cells during storage," Transfusion, 1984; Horowitz et al. "Stabilization of RBCs by the Plasticizer, Di (ethylhexyl)phthalate," Vox Sarguinis, 1985, certain plasticizers may have a beneficial effect on the storage life of RBCs. More particularly, plasticizers such as DEHP have been found to suppress hemolysis of RBCs stored in containers that include such leachable plasticizers.

More recently, certain non-DEHP plasticizers have been found to also provide hemolysis suppression in RBCs. U.S. Pat. No. 9,993,389, incorporated by reference herein in its entirety, discloses plastic containers plasticized with 1,2-cyclohexanedicarboxylic acid diisononyl ester (or DINCH), a leachable plasticizer, for the storage of red blood cells with acceptable hemolysis levels. U.S. Patent Publication No. 2014/0276527, also incorporated by reference herein in its entirety, discloses plastic containers plasticized with di-2-ethylhexyl terephthalate ester, also a leachable plasticizer. Publication No. 2017/0172847, also incorporated herein by reference in its entirety, discloses the previously mentioned DINCH and DEHT esters as well as certain citrate esters that may be suitable plasticizers for PVC containers for the storage of blood components, such as RBCs. Still further, two or more plasticizers may be combined as described in US Patent Publication No. US 2021/0205173, which is also incorporated by reference.

As noted above, concentrated RBCs are typically stored in a storage medium/additive solution that includes components selected to maintain and enhance the storage shelf-life of the concentrated RBCs. Current commercial storage media are capable of extending the shelf-life of RBCs to up to 42 days. One such widely used storage medium is Adsol^{®} Additive Solution (AS-1) available from Fenwal, Inc., of Lake Zurich, IL, a subsidiary of Fresenius-Kabi, Bad Homburg, Germany. Adsol or AS-1 is a sodium chloride based additive solution that includes, among other things, a nutrient such as glucose, a buffer and mannitol-a cell membrane protectant. Adsol has a pH of approximately 5.5 and an effective osmolality of approximately 349. Another commercially available red blood cell storage media SOLX^{®} Additive available from Hemerus. SOLX ^{®} includes, among other things, dextrose, mannitol and a sodium bicarbonate buffer. Other examples of chloride-free, hypotonic storage media such as Erythro-Sol of E-Sol are also described in U.S. Patent No. 5,250,303 (Meryman), U.S. Patent No. 9,968,992 and in "Red cell storage in E-Sol 5 and Adsol additive solutions: paired comparison using mixed and non-mixed study designs," Radwanski et al., Vox Sanguinis (2014) 106, pp. 322-329, all of which are incorporated herein by reference.

Additional compounds that may be added to the RBC storage medium are described in U.S. Patent Publication No.: US 2017/0042139, which is incorporated by reference. US 2017/0042139 describes adding emulsions of lipids, such as cholesterol or phosphatidyl choline to the storage medium.

As maximizing the storage shelf life of RBCs even beyond the current standard storage period of 42 days and even beyond 49 days, remains an area of keen interest, it would be desirable to provide a storage system that selectively includes container formulations and storage medium compositions to effectively maintain and suppress hemolysis levels in the stored RBCs.

### Summary

In one aspect, the subject matter disclosed herein is directed to a system for the prolonged storage of red blood cells. The system includes a flexible container with walls defining an interior chamber. The walls may be made from a composition that includes a polymer and at least two hemolysis suppressing agents. The system further includes a storage medium of (i) an aqueous solution comprising at least nutrient for red blood cells, and a buffer and (ii) a fat emulsion comprising a mixture of two or more lipids entrained in the aqueous solution.

In another aspect, the subject matter disclosed herein is directed to a stored red blood cell product comprising concentrated red blood cells having an average hemolysis (for example, of at least 10 RBC storage containers) level of less than 0.15% after 42 days storage and less than 0.25% after at least 50 days of storage at 4°C.

In a further aspect, the subject matter of the present disclosure is directed to red blood cell product. The red blood cell product includes a flexible container with walls defining an interior chamber. The container walls are made from a polymeric material and at least two hemolysis suppressing agents. The red blood cell product further includes a suspension of concentrated red blood cells suspended in a storage medium of (i) an aqueous solution comprising at least nutrient for red blood cells, a buffer and (ii) a fat emulsion comprising a mixture of two or more lipids entrained in said aqueous solution, wherein said suspension is suspended within said interior chamber.

### Brief Description of the Drawings

Features, aspects, and advantages of the present embodiments will become apparent from the following description, appended claims, and the accompanying exemplary embodiments shown in the drawings, which are briefly described below.
FIG. 1 is a front view of a typical RBC storage container used for storing the RBC suspensions and/or compositions described herein; and
FIG. 2 is a side view of the container of FIG. 1.

### Detailed Description of the Embodiments

There are several aspects of the present subject matter which may be embodied separately or together in the systems and products described and claimed below. These aspects may be employed alone or in combination with other aspects of the subject matter described herein, and the description of these aspects together is not intended to preclude the use of these aspects separately or the claiming of such aspects separately or in different combinations as set forth in the claims appended hereto.

During storage, concentrated RBCs and the storage media in which they are stored may be kept in a sealed container, usually made of a plastic (polymeric) material. Containers approved for the collection of whole blood and the storage of RBCs are typically made of a polyvinyl chloride (PVC). As described above, because PVC can be somewhat rigid or brittle, one or more plasticizers may be incorporated into the PVC.

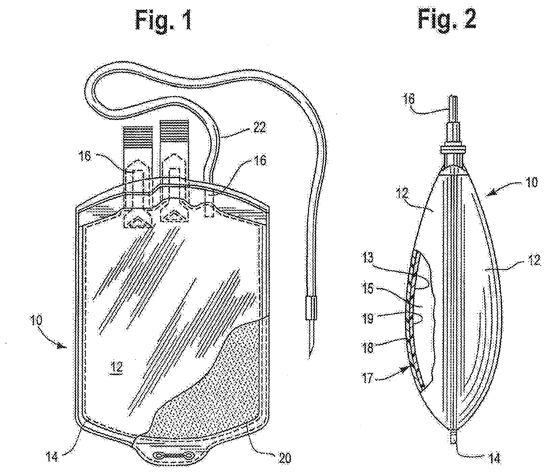

FIGS. 1 and 2 depict an embodiment of a blood storage container that may be used to hold red blood cells and a storage solution incorporating lipids. Container 10 may include one or more container walls 12 which define an interior chamber 15 for receiving the RBCs and storage medium 20. In one embodiment, two sheets made of a plastic material may be brought together and sealed along their peripheries 14 to form container 10. Other ways of making container 10 will be known to those of skill in the art and are within the scope of the present disclosure.

As shown in FIG. 2, container wall 12 may include an inner surface 13 which contacts the stored RBCs and an outer surface 17. In one embodiment, container wall 12 may be made of a single layer of a polymer material, such as PVC (or non-PVC) polymer or polymer blend. In another embodiment, container wall 12 may be made of a multiple sheet laminate wherein inner surface 13 is made of one material and outer surface 17 is made of a different material. Container 10 may include one or more access ports 16 for connection with tubing 22, docking devices and the like to establish flow into and out from the interior chamber 15 of container 10.

Container walls are made in whole or at least in part of a plastic material that may include at least one or more polymeric compounds. The one or more plastic and/or polymeric compounds may be blended together and formed into flat sheets that are sealed together. The polymeric material may be made from or otherwise include polyvinyl chloride (PVC) or one or more non-PVC polyolefin homopolymers, copolymers or blends thereof.

As described above, plasticizers have been found to provide hemolysis suppression in red blood cells through leaching of the plasticizer from the container walls. In accordance with the storage systems described herein, several commercially available, non-DEHP plasticizers may be used. One such plasticizer is 1,2-cyclohexane dicarboxylic acid diisononyl ester or "DINCH." DINCH is commercially available from e.g., BASF (Ludwigshafen, Germany under the product name Hexamoll^{®}.) PVC formulations plasticized with DINCH for use in blood storage containers are disclosed in U.S. Pat. No. 9,993,389, assigned to the assignee of the present application, and U.S. Patent Application Publication No.: 2017/0172847. The contents of both U.S. Pat. No. 9,993,389 and U.S. Patent Application Publication No.: 2017/0172847 are incorporated herein by reference.

A further plasticizer that has also been found to suppress hemolysis in red blood cells is the terephthalate ester, di-2-ethyl hexyl terephthalate or DEHT (also referred to as di-octyl terephthalate ester or DOTP). DEHT is commercially available from Eastman Chemical Co. (Kingsport, Tenn., USA under the product name Eastman 168).

Still other plasticizers that are capable of suppressing hemolysis in red blood cells are those in the family of citrate esters. Preferred examples of citrate esters include acetyl tributyl citrate (ATBC), acetyl tri-hexyl citrate (ATHC), and butyryl tri-hexyl citrate (BTHC), ATBC and BTHC being most preferred. These citrate esters are available from e.g., Vertellus Specialties Inc (Parsippany, N.J., USA; product names Citroflex^{®}. A4, A6, or B6). Use of certain citrate esters (in combination with other leaching plasticizers) in blood storage containers is disclosed in U.S. Patent Nos. 4,824, 893; 4,710,532 and 4,711,922, the aforementioned U.S. Pat. No. 9,993,389, U.S. Patent Application Publication US 2014/0276527 and U.S. Patent Application Publication No.: 2017/0172847, all of which are and have been incorporated by reference.

In accordance with the present disclosure, it may be desirable to combine or mix two or more plasticizers with the PVC or other polymer. As described in US 2021/0205173, a mixed plasticizer system may allow for better control over leaching and the amount of plasticizer in the RBCs than with a single plasticizer, while still maintaining hemolysis suppression that is comparable to established plasticizers, such as DEHP-plasticized formulations/compositions. Mixed plasticizer systems may also help reduce costs and improve processing, sealing and/or allow for different forms of sterilization. Mixed plasticizer systems may also allow for storage of whole blood and blood components other than red blood cells wherein the particular ratio of plasticizers can be tailored to the storage needs of the component and even to particular groups of donors. Selecting plasticizers with different rates of leaching allows modifying the rate at which plasticizers leach into the blood. Reducing the plasticizer leaching rate may also prevent the plasticizer concentration from being too high or too low in the blood.

Polymeric compositions with mixed plasticizers in accordance with the present disclosure include two, three, four or all of the following hemolysis suppressing plasticizers: acetyl tributyl citrate (ATBC), acetyl tri-hexyl citrate (ATHC), and butyryl tri-hexyl citrate (BTHC), 1 ,2-cyclohexane dicarboxylic acid diisononyl ester (DINCH) and di-2-ethyl hexyl terephthalate (DEHT).

Accordingly, the polymeric composition may include PVC and a mixed plasticizer selected from the following plasticizer combinations: ATBC/ATHC, ATBC/BTHC, ATBC/DEHT, ATBC/DINCH, ATHC/BTHC, ATHC/DEHT, ATHC/DINCH, BTHC/DEHT, BTHC/DINCH, DEHT/DINCH, ATBC/ATHC/BTHC, ATBC/ATHC/DEHT, ATBC/ATHC/DINCH, ATBC/BTHC/DEHT, ATBC/BTHC/DINCH, ATBC/DEHT/DINCH, ATHC/BTHC/DEHT, ATHC/BTHC/DINCH, ATHC/DEHT/DINCH, BTHC/DEHT/DINCH, ATBC/ATHC/BTHC/DEHT, ATBC/ATHC/BTHC/DINCH, ATBC/ATHC/DEHT/DINCH, ATBC/BTHC/DEHT/DINCH, ATHC/BTHC/DEHT/DINCH and combinations that include ATBC, it is preferred that the ATBC not make up more than 20%, by weight, of the total plasticizer content.

Turning now to the storage medium, the RBC storage medium may assist in providing for the extended storage of RBCs for over 21 days, over 35 days, up to at least 42 days with an average hemolysis below 0.15%, and even up to at least 49, 50 and/or 56, or more than 56 days with average hemolysis below 0.25%. In one embodiment, the RBC storage media may include at least sodium chloride, glucose (nutrient), mannitol and adenine. In a specific example, the media includes approximately 111 mM (millimoles) glucose (dextrose), 154 mM sodium chloride, 41 mM mannitol and 2.0 mM adenine. The media also has a pH of about 5.0 and is substantially isotonic.

In another embodiment, the media suitable for the storage of RBCs in accordance with the present disclosure may generally be hypotonic and may not contain sodium chloride. Such media may also include a nutrient, a buffer, other additives such as sodium citrate, and may typically have a pH of about 8.0 or higher.

More specific examples of hypotonic, high pH additive solutions are described in U.S. Patent Publication No. US 2014/0091047, which is incorporated herein by reference in its entirety. In a specific embodiment, the RBC storage media includes between about 1 to 2.2 mM of adenine; about 20 mM to about 110 mM of mannitol; about 2.2 mM to about 40 mM sodium citrate; about 16 mM to about 30 mM sodium phosphate dibasic and about 20 mM to about 140 mM of glucose. The pH of the additive solution is above about 8.0.

The storage medium for the concentrated RBCs may be further modified to include a mixture of emulsified lipids such as cholesterol and phosphatidyl choline. In one embodiment, the fat emulsion may include an approximate 3:1 ratio of cholesterol to phosphatidyl choline. The fat emulsion may be present in the storage medium in a concentration of less than 0.5%, less than 0.4%, less than 0.3% and less than 0.2 %. In one embodiment the concentration of the fat emulsion in the storage medium may be approximately 0.1%.

Concentrated RBCs with some or most of the plasma removed may be combined with the storage media (including the fat emulsion) of the type described above to provide the RBC composition. In one embodiment, the RBC composition may include between about 80 to 150 ml of the storage media combined with about 180 to 250 ml of the concentrated RBCs.

In a specific embodiment, a red blood cell product in accordance with the present disclosure will include a container wherein the container walls are made of a composition that includes a PVC polymer and a combination of two or more plasticizers selected from the combination of two, three, four and five plasticizer combinations listed above. The red blood cells stored in such container are suspended in a storage medium that includes an aqueous, chloride-free and/or hypotonic solution and further includes a mixture of emulsified lipids such as cholesterol and phosphatidyl choline. The fat emulsion may include an approximate 3:1 ratio of cholesterol to phosphatidyl choline and comprise approximately 0.1% of the storage medium.

In an even more specific embodiment, the red blood cell product in accordance with the present disclosure will include a container wherein the container walls are made of a composition that includes a PVC polymer and a combination of two or more plasticizers selected from the combination of two, three, four and five plasticizer combinations listed above. The red blood cells stored in such container are suspended in a storage medium that includes an aqueous, chloride-free and/or hypotonic solution that includes approximately 111 Mm glucose, 41 Mm mannitol, 25 Mm sodium citrate, approximately 20 Mm of sodium phosphate buffer, approximately 2 Mm adenine. The above-described aqueous solution has an effective osmolality of approximately 181 mOsm and a Ph of approximately 8.4. The storage medium further includes a mixture of emulsified lipids such as cholesterol and phosphatidyl choline. The fat emulsion may include an approximate 3:1 ratio of cholesterol to phosphatidyl choline and comprise approximately 0.1% of the storage medium.

The red blood cell products described above may include concentrated red blood cells that have an average hemolysis level (for example, at least 10 RBC containers) of less than 0.25% after at least 50 days of storage at 4°C.

There are additional embodiments to the methods and systems described herein including, without limitation, the following aspects.

In a first additional embodiment, a system for the prolonged storage of red blood cells is provided. The system includes a flexible container with walls defining an interior chamber, the walls comprising a polymeric composition including a polymer and at least two hemolysis suppressing agents. The system includes a storage medium comprising (i) an aqueous solution comprising at least a nutrient for red blood cells, a buffer and (ii) a fat emulsion comprising a mixture of two or more lipids entrained in the aqueous solution.

A second additional embodiment includes the system of the first additional embodiment wherein said polymer comprises polyvinyl chloride.

A third embodiment includes the system of any one of first and second embodiments wherein the hemolysis suppressing agents are plasticizers for said polyvinyl chloride.

A fourth embodiment includes the system of any one of the first through third embodiments wherein the at least two plasticizers are selected from the group consisting of acetyl tributyl citrate (ATBC), acetyl tri-hexyl citrate (ATHC), butyryl tri-hexyl citrate (BTHC), di-2-ethylhexyl terephthalate (DEHT) and 1,2-Cyclohexanonedicarboxylic acid, diisononyl ester (DINCH).

A fifth embodiment includes the system of fourth embodiment wherein one of the plasticizers is acetyl tributyl citrate (ATBC).

A sixth embodiment includes the system of the fifth embodiment wherein, as a percentage of total plasticizer content, the ATBC does not exceed 20%.

A seventh embodiment includes the system of any one of fifth and sixth embodiments wherein three hemolysis suppressing agents consist of ATBC, acetyl tri-hexyl citrate (ATHC) and butyryl tri-hexyl citrate (BTHC).

An eighth embodiment includes the system of any one of fifth and sixth embodiments wherein three hemolysis suppressing agents consist of ATBC, acetyl tri-hexyl citrate (ATHC) and di-2-ethylhexyl terephthalate (DEHT).

A ninth embodiment includes the system of any one of the fifth and sixth embodiments wherein three hemolysis suppressing agents consist of ATBC, butyryl tri-hexyl citrate (BTHC) and di-2-ethylhexyl terephthalate (DEHT).

A tenth embodiment includes the system of any one of the fifth and sixth embodiments wherein three hemolysis suppressing agents consist of ATBC, di-2-ethylhexyl terephthalate (DEHT) and 1,2-Cyclohexanonedicarboxylic acid, diisononyl ester (DINCH).

An eleventh embodiment includes the system of any one of the first through fourth embodiments wherein three hemolysis suppressing agents consist of ATBC, di-2-ethylhexyl terephthalate (DEHT) and 1,2-Cyclohexanonedicarboxylic acid, diisononyl ester (DINCH).

A twelfth embodiment includes the system of any one of the first through eleventh embodiments wherein the aqueous solution is free of chloride.

A thirteenth embodiment includes the system of any one of the first through twelfth embodiments wherein the aqueous solution has an effective osmolality of less than approximately 300 mOsm.

A fourteenth embodiment includes the system of any one of the first through thirteenth embodiments wherein the aqueous solution is hypotonic.

A fifteenth embodiment includes the system of any one of the first through fourteenth embodiments wherein the aqueous solution has a pH of greater than 7.

A sixteenth embodiment includes the system of any one of the first through sixteenth embodiments wherein the aqueous solution further includes adenine, mannitol and citrate.

A seventeenth embodiment includes the system of any one of the first through sixteenth embodiments comprising approximately 111 Mm glucose, approximately 41 mM mannitol, approximately 25 mM citrate, approximately 20 mM phosphate and approximately 2 mM adenine.

An eighteenth embodiment includes the system of any one of the first through seventeenth embodiments wherein the fat emulsion includes a mixture of cholesterol and phosphatidyl choline.

A nineteenth embodiment includes the system of the eighteenth embodiment wherein the mixture comprises cholesterol and phosphatidyl choline in a ratio of approximately 3:1.

In a twentieth embodiment, a stored red blood cell product is provided. The red blood cell product includes concentrated red blood cells having an average hemolysis level of less than 0.25 % after at least 50 days of storage at 4°C.

In a twenty-first embodiment, a red blood cell product is provided. The red blood cell product includes a) a flexible container comprising walls defining an interior chamber, the walls comprising a polymeric composition including a polymer and at least two hemolysis suppressing agents; b) a suspension of concentrated red blood cells suspended in a storage medium comprising (i) an aqueous solution comprising at least nutrient for red blood cells, a buffer and (ii) a fat emulsion comprising a mixture of two or more lipids entrained in said aqueous solution, wherein the suspension is suspended within said interior chamber.

A twenty-second embodiment includes the red blood cell product of the twenty-first embodiment wherein the polymer comprises polyvinyl chloride.

A twenty-third embodiment includes the red blood cell product of any one of the twenty-first through twenty-second embodiments wherein the hemolysis suppressing agents are plasticizers for polyvinyl chloride.

A twenty-fourth embodiment includes the red blood cell product of any one of the twentieth through the twenty-third embodiments wherein the at least two plasticizers are selected from the group consisting of acetyl tributyl citrate (ATBC), acetyl tri-hexyl citrate (ATHC), butyryl tri-hexyl citrate (BTHC), di-2-ethylhexyl terephthalate (DEHT) and 1,2-Cyclohexanonedicarboxylic acid, diisononyl ester (DINCH).

A twenty-fifth embodiment includes the red blood cell product of any one of the twenty-first through the twenty-fourth embodiments wherein the storage medium includes a fat emulsion entrained therein.

A twenty-sixth embodiment includes the red blood cell product of the twenty-fifth embodiment wherein the fat emulsion comprises a mixture of cholesterol and phosphatidyl choline.

A twenty-seventh embodiment includes the red blood cell product of the twenty-sixth embodiment wherein the mixture comprises cholesterol and phosphatidyl choline in a ratio of approximately 3:1.

A twenty-eighth embodiment includes the red cell product of any one of the twenty-fifth through the twenty-seventh embodiments wherein the concentrated red blood cells have an average hemolysis level of less than 0.25 % after at least 50 days of storage at 4°C.

The embodiments disclosed herein are for the purpose of providing a description of the present subject matter, and it is understood that the subject matter may be embodied in various other forms and combinations not shown in detail. Therefore, specific embodiments and features disclosed herein are not to be interpreted as limiting the subject matter of the invention.

## Claims

1. A system for the prolonged storage of red blood cells comprising:
a. a flexible container comprising walls defining an interior chamber, said walls comprising a polymeric composition including a polymer and at least two hemolysis suppressing agents; and
b. a storage medium comprising (i) an aqueous solution comprising at least nutrient for red blood cells, a buffer and (ii) a fat emulsion comprising a mixture of two or more lipids entrained in said aqueous solution.

2. The system of Claim 1 wherein said polymer comprises polyvinyl chloride and wherein said hemolysis suppressing agents are plasticizers for said polyvinyl chloride.

3. The system of any one of Claims 1 through 2 wherein said at least two plasticizers are selected from the group consisting of acetyl tributyl citrate (ATBC), acetyl tri-hexyl citrate (ATHC), butyryl tri-hexyl citrate (BTHC), di-2-ethylhexyl terephthalate (DEHT) and 1,2-Cyclohexanonedicarboxylic acid, diisononyl ester (DINCH).

4. The system of Claim 3 wherein, one of said plasticizers is acetyl tributyl citrate (ATBC) and as a percentage of total plasticizer content said ATBC does not exceed 20%.

5. The system of Claim 4 comprising three hemolysis suppressing agents, wherein the three hemolysis suppressing agents are selected from the groups consisting of ATBC, acetyl tri-hexyl citrate (ATHC) and butyryl tri-hexyl citrate (BTHC); ATBC, acetyl tri-hexyl citrate (ATHC) and di-2-ethylhexyl terephthalate (DEHT); ATBC, butyryl tri-hexyl citrate (BTHC) and di-2-ethylhexyl terephthalate (DEHT); ATBC, di-2-ethylhexyl terephthalate (DEHT) and 1,2-Cyclohexanonedicarboxylic acid, diisononyl ester (DINCH); and ATBC, di-2-ethylhexyl terephthalate (DEHT) and 1,2-Cyclohexanonedicarboxylic acid, diisononyl ester (DINCH).

6. The system of any one of Claims 1 through 5 wherein said aqueous solution is free of chloride.

7. The system of any one of Claims 1 through 6 wherein said aqueous solution has an effective osmolality of less than approximately 300 mOsm.

8. The system of any one of Claims 1 through 7 wherein said aqueous solution is hypotonic and has a pH of greater than 7.

9. The system of any one of Claims 1 through 8 wherein said aqueous solution further comprises adenine, mannitol and citrate.

10. The system of any one of Claims 1 through 9 wherein said fat emulsion comprises a mixture of cholesterol and phosphatidyl choline.

11. A red blood cell product comprising:
a) a flexible container comprising walls defining an interior chamber, said walls comprising a polymeric composition including a polymer and at least two hemolysis suppressing agents; and
b) a suspension of concentrated red blood cells suspended in a storage medium comprising (i) an aqueous solution comprising at least nutrient for red blood cells, a buffer and (ii) a fat emulsion comprising a mixture of two or more lipids entrained in said aqueous solution,
wherein said suspension is suspended within said interior chamber.

12. The red blood cell product of Claim 11 wherein said polymer comprises polyvinyl chloride and wherein said hemolysis suppressing agents are plasticizers for said polyvinyl chloride.

13. The red blood cell product of any one of Claims 11 through 12 wherein said at least two plasticizers are selected from the group consisting of acetyl tributyl citrate (ATBC), acetyl tri-hexyl citrate (ATHC), butyryl tri-hexyl citrate (BTHC), di-2-ethylhexyl terephthalate (DEHT) and 1,2-Cyclohexanonedicarboxylic acid, diisononyl ester (DINCH).

14. The red blood cell product of any one of Claims 11 through 13 wherein said storage medium includes a fat emulsion entrained therein, wherein said fat emulsion comprises a mixture of cholesterol and phosphatidyl choline.

15. The red cell product of Claim 14 wherein said concentrated red blood cells have an average hemolysis level of less than 0.25 % after at least 50 days of storage at 4°C.
